(19) Europäisches Patentamt
European Patent Office
Office européen des brevets

(11) **EP 4 256 419 B1**

(12) **FASCICULE DE BREVET EUROPEEN**

(45) Date de publication et mention
de la délivrance du brevet:
**18.03.2026  Bulletin 2026/12**

(21) Numéro de dépôt: **21830628.0**

(22) Date de dépôt: **03.12.2021**

(51) Classification Internationale des Brevets (IPC):
**G06E 3/00** *(2006.01)*    **G01J 9/04** *(2006.01)*
**H01S 3/067** *(2006.01)*

(52) Classification Coopérative des Brevets (CPC):
**G06E 3/003; G01J 9/04; H01S 3/0014;**
**H04B 2210/006**

(86) Numéro de dépôt international:
**PCT/EP2021/084233**

(87) Numéro de publication internationale:
**WO 2022/122593 (16.06.2022 Gazette 2022/24)**

(54) **DISPOSITIF LARGE BANDE DE MESURE DE LA CORRÉLATION CROISÉE DE SIGNAUX**

BREITBAND-VORRICHTUNG ZUR MESSUNG DER KREUZKORRELATION VON SIGNALEN

WIDE-BAND DEVICE FOR MEASURING THE CROSS-CORRELATION OF SIGNALS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.12.2020  FR 2012782**

(43) Date de publication de la demande:
**11.10.2023  Bulletin 2023/41**

(73) Titulaires:
• **Centre National de la Recherche Scientifique
75016 Paris (FR)**
• **Université Grenoble Alpes
38400 Saint-Martin-d'Hères (FR)**

(72) Inventeurs:
• **GUILLET DE CHATELLUS, Hugues
35042 Rennes cedex (FR)**
• **BOURDAROT, Guillaume
38400 Saint-Martin-d'Hères (FR)**
• **BERGER, Jean-Philippe
38400 Saint-Martin-d'Hères (FR)**

(74) Mandataire: **IPAZ
Bâtiment Platon
Parc Les Algorithmes
91190 Saint-Aubin (FR)**

(56) Documents cités:
**FR-A1- 3 080 920**

• **BOURDAROT G. ET AL: "Toward a large
bandwidth photonic correlator for infrared
heterodyne interferometry : A first laboratory
proof of concept", vol. 639, no. 53, 1 July 2020
(2020-07-01), DE, pages A53, XP055832213,
ISSN: 0004-6361, Retrieved from the Internet
<URL:https://www.aanda.org/articles/aa/pdf/
2020/07/aa37368-19.pdf> DOI: 10.1051/
0004-6361/201937368**
• **GUILLET DE CHATELLUS HUGUES ET AL:
"Optical real-time Fourier transformation with
kilohertz resolutions", vol. 3, no. 1, 22 December
2015 (2015-12-22), pages 1, XP055832034,
Retrieved from the Internet <URL:https://www.
osapublishing.org/DirectPDFAccess/
8B836479-B8BE-4D9A-8C6F
F5E2DD85F487_333875/optica-3-1-1.pdf?da=1&
id=333875&seq=0&mobile=no> DOI: 10.1364/
OPTICA.3.000001**
• **DURAN V ET AL: "Coherent multi-heterodyne
spectroscopy using acousto-optic frequency
combs", ARXIV.ORG, CORNELL UNIVERSITY
LIBRARY, 201 OLIN LIBRARY CORNELL
UNIVERSITY ITHACA, NY 14853, 20 March 2018
(2018-03-20), XP081224448, DOI: 10.1364/
OE.26.013800**

- CLEMENT JUAN ET AL: "Laser ranging using coherent pulse compression with frequency shifting loops", vol. 27, no. 9, 15 April 2019 (2019-04-15), pages 12000 - 12010, XP055832362, Retrieved from the Internet <URL:https://www. osapublishing.org/DirectPDFAccess/ A98648B1-256C-4B10-BBC8BB31A6CB84 D9_431912/josab-37-6-1812.pdf?da=1& id=431912&seq=0&mobile=no> DOI: 10.1364/ OE.27.012000

**Description**

**Domaine technique** :

L'invention relève du domaine du traitement analogique de signaux optiques et radiofréquences, et plus particulièrement du traitement analogique de signaux optiques et radiofréquences large bande à l'aide de cavités optiques à décalage de fréquence.

**Technique antérieure :**

La connaissance de la corrélation croisée de signaux est primordiale dans de nombreuses applications.

Par exemple, dans le domaine optique, la corrélation croisée de signaux est utilisée en astronomie (interférométrie) et en OCT (Optical Coherent Tomography). Dans ce dernier cas, un signal optique large bande est envoyé dans un échantillon. Un montage interférométrique (interféromètre de Michelson) combinant sur un détecteur le champ incident et le champ rétrodiffusé permet de mesurer le retard qui correspond au maximum de cohérence entre l'onde envoyée, et l'onde réfléchie afin de remonter à la position du réflecteur. Cependant ce type de montage nécessite de scanner une ligne à retard et présente donc des temps d'acquisition importants.

Dans le domaine des signaux radiofréquence (RF), la corrélation de signaux est utilisée pour de nombreuses applications.

Par exemple, en radio-astronomie, la corrélation des signaux RF reçus différentes antennes permet d'imager la source. La problématique de la corrélation en radio-astronomie est particulièrement complexe, car le nombre de signaux à corréler mutuellement dépasse plusieurs dizaines. Cette problématique se rencontre aussi en interférométrie optique hétérodyne, où le signal optique recueilli par le télescope est mélangé à un oscillateur local optique (laser CW), pour produire un signal RF. La corrélation des champs optiques est alors reportée sur la corrélation des signaux RF. La corrélation de signaux peut se faire de deux manières. La méthode analogique consiste à multiplier les deux signaux (dans un mélangeur RF), pour calculer la valeur de $C(\tau) = \langle s_1(t)s_2(t + \tau) \rangle$ pour une certaine valeur du retard $\tau$, et de répéter la mesure en faisant varier ce retard. Cette technique est lente, nécessite une ligne à retard RF variable, est limitée par la bande passante des multiplicateurs RF (« mixers ») - en pratique, 20 GHz -, et n'est adaptée qu'à des signaux stationnaires ou suffisamment longs.

Une autre façon de calculer la corrélation de signaux RF est de les enregistrer, et de faire une ensuite corrélation numérique. Cependant, cette technique nécessite d'importants moyens numériques, surtout lorsque la largeur spectrale du signal à analyser dépasse le GHz. En effet, l'acquisition du signal à de telles fréquences nécessite des techniques d'acquisition (convertisseurs numérique-analogique) et de traitement très lourdes, coûteuses, et énergivores. Il est possible de disperser le signal en bandes spectrales plus réduites, et de réaliser les opérations de corrélation bande par bande, mais au prix d'une complexité supplémentaire. Ainsi, le corrélateur d'ALMA utilise simultanément 134 millions de processeurs. Par ailleurs, l'opération de convolution doit être réalisée en temps réel, ce qui mobilise d'importantes ressources.

Une autre application de la corrélation de signaux est la localisation d'émetteurs (ou radar passif). En mesurant le retard entre deux signaux émis par la même source (c'est-à-dire en calculant leur produit de corrélation), on peut remonter par triangulation, à la position de l'émetteur. En l'absence de corrélateur électronique analogique, la corrélation est faite numériquement, avec les inconvénients décrits précédemment (contraintes sur l'acquisition de signaux et leur traitement).

Une autre application de la corrélation analogique de signaux RF est la compression d'impulsions radar par filtrage adapté. Ce concept permet, en radar par exemple, d'envoyer un signal long (donc énergétique) vers une cible distance, de mesurer le signal de retour en le corrélant avec le signal envoyé. Le résultat de cette corrélation en fonction du retard, produit un pic pouvant être bien plus court (« comprimé ») que le signal envoyé, et ainsi, sortir du bruit de fond. Cette technique de compression d'impulsions peut se faire numériquement, mais là encore, il est nécessaire de numériser les signaux, ce qui est problématique lorsque leur largeur spectrale dépasse plusieurs GHz.

Alternativement, la compression peut se faire par en utilisant la propriété d'un transformée de Fourier d'une corrélation croisée de fonctions $g$ et $f$ vaut : $F[f \star g](u) = F(\overline{f(-t)}) . F(g(t))$. La compression est ainsi réalisée à l'aide un filtrage adapté, c'est à dire un filtre spectral, dont la transformée de Fourier est l'inverse par renversement temporel, de l'un des signaux à corréler. Cette technique est possible lorsque le signal de référence est connu et ne varie pas, la réalisation d'un filtre spectral accordable en temps réel n'étant pas envisageable avec les technologies actuelles.

BOURDAROT G. ET AL, Toward a large bandwidth photonic correlator for infrared heterodyne interferometry : A first laboratory proof of concept, Astronomy&Astrophysics, juillet 2020, Volume 639, Article A53, pages 1 à 7, divulgue un dispositif configuré pour réaliser un corrélation croisée des 2 signaux.

L'invention vise à pallier certains des problèmes précités de l'art antérieur en utilisant deux cavités optique à décalage de fréquence afin de réaliser la corrélation croisée de deux signaux RF ou optique sans nécessiter de scan et avec une bande passante élevée.

**Résumé de l'invention :**

L'invention est définie par les revendications indépendantes 1 et 14. Les revendications dépendantes définissent certains modes de réalisation de l'invention. Plus précisément, un objet de l'invention est un dispositif large bande de mesure de la corrélation croisée d'un premier signal et d'un deuxième signal comprenant :

- une première source adaptée pour générer ledit premier signal $s_1(t)$ ;
- une deuxième source adaptée pour générer ledit deuxième signal $s_2(t)$ ;
- une première cavité optique à décalage de fréquence comprenant un premier décaleur de fréquence adapté pour décaler la fréquence optique du premier signal d'une première fréquence $f_1$ par aller-retour dans ladite première cavité, ladite première cavité présentant un premier temps de parcours $\tau_1$ ;
- une deuxième cavité optique à décalage de fréquence comprenant un deuxième décaleur de fréquence adapté pour décaler la fréquence optique du deuxième signal d'une deuxième fréquence $f_2$ par aller-retour dans ladite deuxième cavité, ladite deuxième cavité présentant un deuxième temps de parcours $\tau_2$ ;
- la première et la deuxième cavité optique étant adaptées pour qu'un nombre d'aller-retour maximal du premier et du deuxième signal dans la première et la deuxième cavité soit égal à $N$ prédéterminé
- un détecteur adapté pour détecter de manière cohérente le premier signal transmis par la première cavité et le deuxième signal transmis par la deuxième cavité et générer un photocourant proportionnel à une intensité lumineuse détectée par ledit détecteur,
- un filtre passe-bas adapté pour filtrer des fréquences du photocourant inférieures à min $\left( \dfrac{f_1}{2} ; \dfrac{f_2}{2} \right)$,
- un processeur configuré pour calculer un module carré d'une transformée de Fourier dudit photocourant, de manière à générer un signal de sortie qui est représentatif d'une corrélation croisée en temps réel entre le premier signal et le deuxième signal, $C(\tau) = \langle s_1(t) s_2^*(t - \tau) \rangle$, avec $\tau = n(\tau_1 - \tau_2), n \in [1, N]$.

Selon des modes particuliers de l'invention :

- le dispositif comprend un laser monochromatique, la première et la deuxième sources comprenant respectivement : une première et une deuxième source RF adaptée pour générer un premier et un deuxième signal RF *s1(t), s2(t)* et un premier et un deuxième modulateur adapté pour moduler en amplitude, par ledit premier et ledit deuxième signal RF *s1(t),* un rayonnement laser généré par ledit laser continu, de manière à former ledit premier et ledit deuxième signal

- la première source est configurée pour générer une pluralité de $i \in [1,p]$ premiers sous signaux $s_{1,i}(t)$ superposés spatialement et temporellement de manière à former le premier signal, chaque i premier sous signal présentant une première fréquence centrale $f_{1,i}$ distinctes des autres, et dans lequel la deuxième source est configurée pour générer une pluralité de $j \in [1, q]$ deuxièmes sous signaux $s_{2,i}(t)$ superposés spatialement et temporellement de manière à former le deuxième signal, chaque *j* deuxième sous signal présentant une deuxième fréquence centrale $f_{2,i}$ distinctes des autres, ledit signal de sortie étant alors une corrélation croisée de chaque premier sous signal avec chaque deuxième sous signal, $C_{i,j}(\tau) = \langle s_{1,i}(t) s_{2,j}^*(t - \tau) \rangle$, avec $\tau = n(\tau_1 - \tau_2), n \in [1,N]$.

- première et la deuxième cavité sont adaptées pour vérifier la condition $f_1 \times \tau_1 = f_2 \times \tau_2$, modulo 1 ledit processeur étant alors configuré pour calculer une transformée de Fourier dudit photocourant, de manière à générer un signal de sortie qui est la partie réelle d'une corrélation croisée en temps réel entre le premier signal et le deuxième signal, $C(\tau) = \langle s_1(t) s_2^*(t - \tau) \rangle$, avec $\tau = n(\tau_1 - \tau_2), n \in [1, N]$ ;

- la première et la deuxième cavité sont adaptées pour que $f_1 \times \tau_1 \neq f_2 \times \tau_2$ modulo 1, ledit processeur étant en outre configuré pour calculer un module carré d'une transformée de Fourier dudit photocourant, le signal de sortie (SS) correspondant alors à un module carré d'une corrélation croisée en temps réel entre le premier signal et le deuxième signal, $|C(\tau)|^2 = |\langle s_1(t) s_2^*(t - \tau) \rangle|^2$, avec $\tau = n(\tau_1 - \tau_2), n \in [1, N]$.

- la première et la deuxième cavité comprennent respectivement un premier et un deuxième amplificateur adaptés pour compenser les pertes induites respectivement par la première et la deuxième cavité ;

- le premier décaleur de fréquence est un premier modulateur acousto-optique excité par un premier oscillateur local adapté pour faire varier ladite première fréquence de décalage et dans lequel le deuxième décaleur de fréquence est un deuxième modulateur acousto-optique excité par un deuxième oscillateur local adapté pour faire varier ladite deuxième fréquence de décalage ;

- la première cavité comprend une première ligne à retard contrôlable et adaptée pour faire varier le premier temps de parcours $\tau_1$ et dans lequel la deuxième cavité comprend une deuxième ligne à retard contrôlable et adaptée pour faire varier le deuxième temps de parcours $\tau_2$ ;

- la première et la deuxième cavité sont des cavités fibrées en anneau comprenant respectivement un premier et un deuxième amplificateur à fibre dopé et un premier et un deuxième filtres optiques passe-bande configurés pour fixer ledit nombre maximal N d'aller-retour dans la première et la deuxième cavité ;

- le dispositif comprend moyens de stabilisation de la première et de la deuxième cavité adaptés pour maintenir au cours du temps la cohérence dudit premier signal transmis par la première cavité avec ledit deuxième signal transmis par la deuxième cavité

- le dispositif comprend une cavité unique en anneau, ledit dispositif comprenant en outre :

  • un premier coupleur (adapté pour injecter ledit premier signal dans ladite cavité unique selon un premier sens,

  • un deuxième coupleur (adapté pour injecter ledit deuxième signal dans ladite cavité unique selon un deuxième sens,

  • ladite première cavité correspondant à la cavité unique dans laquelle le premier signal est injecté selon le premier sens d'injection,

  • ladite deuxième cavité correspondant à la cavité unique dans laquelle le deuxième signal est injecté selon le deuxième sens d'injection.

ladite cavité unique en anneau comprenant :

• un premier circulateur adapté pour diriger le premier signal vers une première ligne à retard contrôlable et adaptée pour faire varier le premier temps de parcours $\tau_1$ et comprenant ledit premier décaleur de fréquence

• un deuxième circulateur adapté pour diriger le deuxième signal vers une deuxième ligne à retard contrôlable et adaptée pour faire varier le deuxième temps de parcours $\tau_1$ comprenant ledit deuxième décaleur de fréquence

• un amplificateur à fibre dopé

• un filtre optique passe bande configuré pour fixer ledit nombre maximal N d'aller-retour

- la première et la deuxième cavité sont configurées pour que $\dfrac{1}{|\tau_1 - \tau_2|} \geq 40\, GHz$ ;

- la première et la deuxième cavité sont configurés pour que N soit supérieur à 200

Un autre objet de l'invention est une méthode de mesure de la corrélation croisée d'un premier et d'un deuxième signal utilisant une première cavité optique à décalage de fréquence présentant un premier temps de parcours $\tau_1$ et une deuxième cavité optique à décalage de fréquence comprenant un deuxième décaleur de fréquence présentant un deuxième temps de parcours $\tau_2$, un nombre maximal d'aller-retour du premier signal et du deuxième dans la première et la deuxième cavité étant égal à $N$ prédéterminé, ladite méthode comprenant les étapes suivantes :

A. générer ledit premier signal $s_1(t)$ et ledit deuxième signal $s_2(t)$;
B. injecter ledit premier signal dans la première cavité optique à décalage de fréquence et décaler la fréquence optique du premier signal d'une première fréquence $f_1$ par aller-retour dans ladite première cavité, injecter ledit deuxième signal dans la deuxième cavité optique à décalage de fréquence et décaler la fréquence optique du deuxième signal d'une deuxième fréquence $f_2$ par aller-retour dans ladite deuxième cavité;

C. détecter de manière cohérente le premier signal transmis par la première cavité et le deuxième signal transmis par la deuxième cavité et générer le photocourant proportionnel à l'intensité lumineuse détectée, un nombre maximal d'aller-retour du premier et du deuxième signal dans respectivement la première et la deuxième cavité avant qu'ils soient transmis, étant égal à N prédéterminé, et

D. filtrer des fréquences du photocourant inférieures à $\min\left(\frac{f_1}{2}; \frac{f_2}{2}\right)$,

E. calculer un module carré d'une transformée de Fourier dudit photocourant filtré, de manière à générer un signal de sortie qui est représentatif d'une corrélation croisée en temps réel entre le premier signal et le deuxième signal,

$$C(\tau) = \langle s_1(t) s_2^*(t - \tau) \rangle$$ , avec $\tau = n(\tau_1 - \tau_2)$, $n \in [1, N]$.

**Brève description des figures** :

D'autres caractéristiques, détails et avantages de l'invention ressortiront à la lecture de la description faite en référence aux dessins annexés donnés à titre d'exemple et qui représentent, respectivement :

La figure 1, une vue schématique d'un dispositif de mesure de la corrélation croisée large bande selon l'invention,

La figure 2, une vue schématique d'un dispositif de mesure de la corrélation croisée large bande selon un premier mode de réalisation de l'invention,

La figure 3, une vue schématique d'un dispositif de mesure de la corrélation croisée large bande selon un deuxième mode de réalisation l'invention

La figure 4, une vue schématique d'un dispositif de mesure de la corrélation croisée large bande selon un troisième mode de réalisation l'invention

La figure 5, une méthode de mesure de la corrélation croisée selon l'invention

La figure 6, une vue schématique d'un dispositif de mesure de la corrélation croisée large bande selon un quatrième mode de réalisation l'invention

Les références aux figures, quand elles sont identiques, correspondent aux mêmes éléments.
Les références aux figures, quand elles sont identiques, correspondent aux mêmes éléments.
Dans les figures, sauf contre-indication, les éléments ne sont pas à l'échelle.

**Description détaillée:**

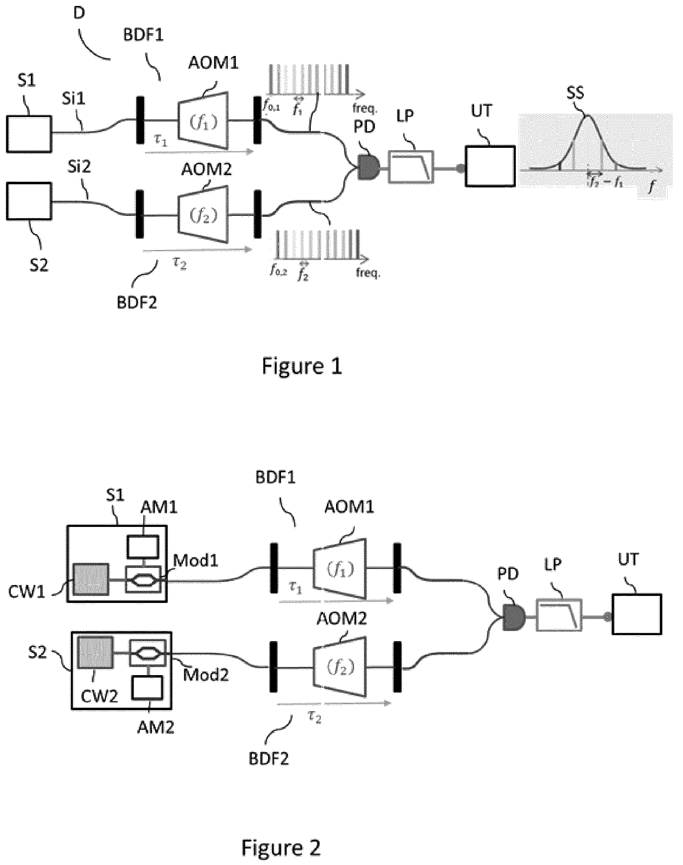

La figure 1 est une représentation schématique d'un dispositif D de la mesure de la corrélation croisée de signaux selon l'invention. Comme cela sera précisé plus loin, grâce à une première cavité optique à décalage de fréquence BDF1 et une deuxième cavité optique à décalage de fréquence BDF2 le dispositif D de l'invention permet de déterminer une représentation dans l'espace fréquentiel du module carré de la corrélation croisée de deux ou plus de deux signaux. De plus, moyennant une condition particulière liant ces cavités, le dispositif de l'invention permet de déterminer une représentation dans l'espace fréquentiel de la corrélation croisée de deux ou plus de deux signaux

Par « large bande », on entend ici que la bande passante du dispositif est supérieure ou égale à 20 GHz, préférentiellement supérieure ou égale à 40 GHz. Les paramètres contrôlant la bande passante du dispositif seront précisés plus loin dans la description.

Le dispositif D de l'invention comprend une première source S1 de rayonnement adaptée pour générer un premier signal d'intérêt $s_1(t)$ Si1 et une deuxième source S2 de rayonnement adaptée pour générer un deuxième signal d'intérêt $s_2(t)$ Si2.

Le premier signal Si1 est injecté dans la première cavité optique à décalage de fréquence BDF1. Cette cavité BDF1 présente un premier temps de parcours $\tau_1$ (temps d'aller-retour dans la cavité) et comprend un premier décaleur de fréquence AOM1 adapté pour décaler la fréquence optique du premier signal d'une première fréquence $f_1$ par aller-retour dans la première cavité.

De manière similaire, le deuxième signal Si2 est injecté dans la deuxième cavité optique à décalage de fréquence BDF2 qui présente un deuxième temps de parcours $\tau_2$ et qui comprend un deuxième décaleur de fréquence AOM2 adapté pour décaler la fréquence optique du deuxième signal d'une deuxième fréquence $f_2$ par aller-retour dans la deuxième cavité.

La première cavité optique BDF1 et la deuxième cavité optique BDF2 peuvent être indifféremment et sans sortir du cadre de l'invention une cavité linéaire ou une cavité en anneau, et une cavité en espace libre ou une cavité fibrée.

De manière essentielle, la première et la deuxième cavité optique sont adaptées pour qu'un nombre maximal d'aller-retour du signal dans la première et la deuxième cavité soit égal à un nombre $N$ prédéterminé. Ainsi, en appelant $f_0$, la fréquence centrale du signal d'intérêt, la première et la deuxième cavité génèrent chacune un peigne de fréquences comprenant respectivement les fréquences $f_0 + n \times f_1$ et $f_0 + n \times f_2$, avec $n \in [1; N]$. Concrètement, la première et la deuxième cavité produisent des répliques du signal d'intérêt, décalées à la fois temporellement (de multiples de $\tau_1$ et $\tau_2$ respectivement), et en fréquence (de multiples de $f_1$ et $f_2$ respectivement).

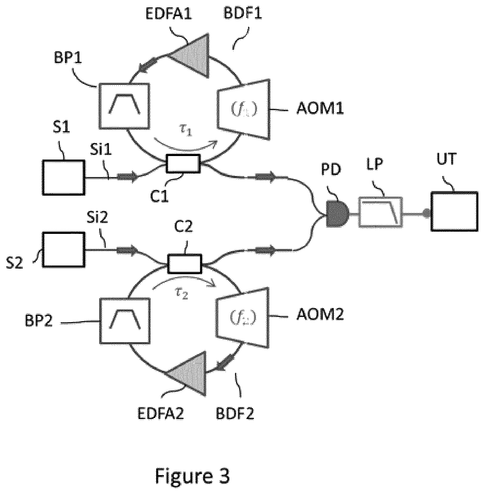

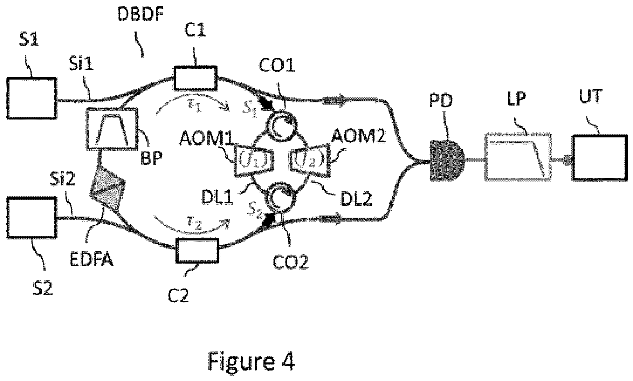

Selon un mode de réalisation, afin de contrôler ce nombre maximal d'aller-retour N, la première et la deuxième boucle comprennent respectivement un premier et un deuxième filtre passe bande BP1, BP2 (non représenté en figure 1 mais visibles en figures 3 et 4), de largeur de bande adaptée pour transmettre respectivement les fréquences $f_0 + n \times f_1$ et $f_0 + n \times f_2$, avec $n$ E [1; $N$].

Le premier décaleur de fréquence AOM1 et le second décaleur de fréquence AOM2 sont préférentiellement des modulateurs acousto-optiques contrôlés par un premier OL1 et un deuxième oscillateur local OL2 (non représenté dans les figures). La fréquence d'excitation générée par le premier oscillateur local et le deuxième oscillateur local permet de faire varier la première fréquence $f_1$ et la deuxième fréquence $f_2$. Alternativement, le premier et le second décaleur de fréquence sont des modulateurs électro-optiques à bande latérale unique (ou SSB MZM, pour single sideband Mach Zehnder modulator).

Le dispositif D comprend en outre un détecteur PD adapté pour détecter de manière cohérente le premier signal Si1 transmis par la première cavité et le deuxième signal Si2 transmis par la deuxième cavité. Le détecteur PD est typiquement une photodiode ou tout autre photodétecteur connu de l'homme de l'art. De préférence, le détecteur PD est formé par des photodiodes balancées afin de détecter de très faibles variations de signal lumineux.

Ce détecteur PD détecte en temps réel une intensité lumineuse qui correspond à la sommation cohérente de toutes les répliques du signal d'intérêt décalées à la fois temporellement, et en fréquence (les peines de fréquences) par la première et la deuxième cavité et génère alors un photocourant Tr proportionnel à cette intensité lumineuse détectée. Pour que le dispositif fonctionne, il est essentiel que le premier signal Si1 transmis par BDF1 soit cohérent avec le signal Si2 transmis par BDF2.

Le photocourant Tr est alors filtré par un filtre analogique passe-bas LP adapté pour laisser passer des fréquences du photocourant inférieures aux fréquences de Nyquist associées au premier signal Si1 et au second signal Si2, c'est-à-dire min($f_1/2$ ; $f_2/2$)

Enfin, le dispositif D comprend un processeur UT configuré pour calculer une transformée de Fourier (TF) du photocourant filtré par le filtre LP, générant ainsi un signal de sortie SS. Par le biais de ce signal de sortie, le dispositif D permet de déterminer une représentation fréquentielle de la corrélation croisée de $s_1(t)$ avec $s_2(t)$ échantillonnée par $N$ points. Plus précisément, SS est représentatif d'une corrélation croisée en temps réel entre le premier signal et le deuxième signal, soit $C(\tau) = \langle s_1(t)s_2^*(t-\tau)\rangle$, avec $\tau = n(\tau_1 - \tau_2) = n. \Delta n, n \in [1, N]$.

En effet, les inventeurs ont démontré que le photocourant Tr s'exprime sous la forme suivante :

$$I(t) = \sum_n C(t, n\Delta\tau) \ e^{-i2\pi n\Delta ft}e^{-i\pi(f_1\tau_1 - f_2\tau_2)n^2} \ (Eq. 1)$$

Selon une première variante de l'invention, la première et la deuxième cavité sont adaptées pour vérifier la condition $f_1 \times \tau_1 = f_2 \times \tau_2$ modulo 1. Dans cette première variante, le signal de sortie SS correspond alors à la partie réelle d'une corrélation croisée en temps réel entre le premier signal et le deuxième signal, $C(\tau) = \langle s_1(t)s_2^*(t-\tau)\rangle$, avec $\tau = n(\tau_1 - \tau_2), n \in [1, N]$. La TF du photocourant Tr permet donc d'accéder directement à la partie réelle de la fonction de corrélation croisée, à l'instant $t$, entre le Si1 et Si2 échantillonnée par $N$ points par un pas $\Delta\tau = (\tau_1 - \tau_2)$, soit $\overline{I}(n\Delta f, t) \propto C(t, n\Delta\tau)$.

Selon une deuxième variante de l'invention, la première et la deuxième cavité sont adaptées pour que $f_1 \times \tau_1 \neq f_2 \times \tau_2$ modulo 1. Le processeur est alors configuré pour calculer un module carré d'une transformée de Fourier du photocourant Tr, le signal de sortie SS correspondant alors à un module carré d'une corrélation croisée en temps réel entre le premier signal et le deuxième signal, $|C(\tau)|^2 = |\langle s_1(t)s_2^*(t-\tau)\rangle|^2$, avec $\tau = n(\tau_1 - \tau_2), n$ E $[1,N]$. Le module carré de la TF du photocourant Tr permet donc d'accéder au module carré de la fonction de corrélation croisée, à l'instant $t$, entre le Si1 et Si2 échantillonnée par $N$ points par un pas $\Delta\tau = (\tau_1 - \tau_2)$.

Dans un souci de clarté, le développement des équations explicitant ces résultats est présenté à la fin de la présente description.

Un avantage important du dispositif de l'invention est qu'il permet ainsi de mesurer la partie réelle de la corrélation croisée (ou le module carré de la corrélation croisée) de deux signaux de manière instantanée échantillonnée par $N$ points sans avoir besoin de scanner une ligne à retard. L'acquisition est donc plus rapide et on s'affranchit d'éventuels problèmes liés à la fluctuation des signaux au cours de l'acquisition. Dans l'invention, il n'est pas nécessaire que les signaux soient des signaux stationnaires. De plus, l'invention permet d'obtenir la fonction de corrélation croisée par une simple TF d'un signal relativement lent (échantillonné à moins de quelques dizaines de Méch/s), une opération qui n'est pas coûteuse en termes de ressource computationnelle.

Pour des raisons de concision, dans la suite du document, on dira simplement que le dispositif mesure la corrélation croisée de deux signaux. Il est entendu que cette phrase couvre la première variante de l'invention et le cas spécifique où $f_1 \times \tau_1 = f_2 \times \tau_2$, modulo 1 et le processeur génère un signal de sortie qui correspond à la partie réelle de la corrélation croisée, et la deuxième variante de l'invention, soit le cas plus général où $f_1 \times \tau_1 \neq f_2 \times \tau_2$, modulo 1 et le processeur génère un signal de sortie qui correspond au module carré de la corrélation croisée.

De manière préférentielle, le filtre passe-bas LP est adapté pour filtrer des fréquences du photocourant inférieures à une valeur $\min[N \times |f_1 - f_2| ; f_1/2 ; f_2/2)]$, avant le calcul de la TF du photocourant par le processeur UT. Le filtrage des fréquences inférieures à $N \times |f_1 - f_2|$ permet, si cette valeur est inférieure aux fréquences de Nyquist $f_1/2$ ; $f_2/2$ , de traiter le photocourant Tr avec un processeur comprenant une électronique de traitement plus lente (typiquement 50 Méch/s).

La résolution temporelle du dispositif (c'est à dire le temps que met le système à calculer et produire a fonction de corrélation) est égale à $\tau_1 - - \tau_2$. On note que les données sont obtenues en temps réel, c'est-à-dire que la fonction de corrélation croisée déterminée est actualisée toute les périodes $\tau_1 - \tau_2$. Dans le dispositif D de l'invention, la bande passante est égale à $LS_{in} = 1/(\tau_1 - \tau_2)$. Cette caractéristique est très intéressante car en minimisant la différence $\tau_1 - \tau_2$, il est possible de maximiser la bande passante du dispositif D. Ainsi, selon un mode de réalisation, la résolution temporelle est inférieure à la dizaine de picosecondes, ce qui permet de corréler des signaux de plusieurs dizaines de GHz de largeur spectrale. Alternativement, selon un autre mode de réalisation, $\tau_1 - \tau_2$ vaut quelques centaines de microsecondes, pour permettre la corrélation de signaux fins spectralement (typiquement quelques MHz).

De plus, la résolution temporelle $\tau_1 - \tau_2$ correspond aussi à la période d'échantillonnage de la fonction de corrélation croisée $C(\tau) = \langle s_1(t)s_2^*(t-\tau)\rangle$ , avec $\tau = n(\tau_1 - \tau_2)$, $n \in [1, N]$. De manière préférentielle, afin d'échantillonner la fonction de corrélation croisée avec suffisamment de points, la première et la deuxième cavité sont configurées pour qu'un nombre maximal d'aller-retour maximal N soit supérieur à 200, préférentiellement supérieur à 500.

Selon un mode de réalisation, la première cavité comprend une première ligne à retard DL1 (non représenté) contrôlable et adaptée pour faire varier le premier temps de parcours $\tau_1$ et/ou la deuxième cavité comprend une première ligne à retard DL2 (non représenté) contrôlable et adaptée pour faire varier le deuxième temps de parcours $\tau_2$. Ainsi, il est possible de contrôler la différence $(\tau_1 - \tau_2)$ afin de contrôler la résolution temporelle et la bande passante $LS_{in}$ du dispositif D. De manière préférentielle, la différence $(\tau_1 - \tau_2)$ est telle que la bande passante $LS_{in}$ est supérieure ou égale à 20 GHz, préférentiellement supérieure ou égale à 40 GHz.

Un avantage des modes de réalisation de l'invention comprenant des lignes à retard DL1, DL2 et/ou des décaleurs à fréquence AOM1, AOM2 qui permettent de faire varier $f_1$ et $f_2$ est donc de permettre de contrôler l'échelle de la fonction de corrélation (fixée par $\Delta f/\Delta\tau$, avec $\Delta f = f_1 - f_2$) et de facilement vérifier la condition $f_1 \times \tau_1 = f_2 \times \tau_2$ tout en maximisant la bande passante.

On note que dans les modes de réalisation de l'invention dans lesquels la première et la deuxième cavité BDF1, BDF2 comprennent respectivement un premier et deuxième filtre passe bande BP1, BP2, la bande passante $LS_{in}$ est égale à une largeur spectrale $LS_{BP}$ du premier et du deuxième filtre passe bande lorsque cette largeur spectrale $LS_{BP}$ est inférieure à $1/(\tau_1 - \tau_2)$. En d'autres termes, la bande passante est égale à $LS_{in} = \min(1/(\tau_1 - \tau_2); LS_{BP})$.

Selon un mode de réalisation, la première et la deuxième cavité comprennent respectivement un premier et un deuxième amplificateur EDFA1, EDFA2 (non représentés en figure 1 mais visibles en figure 4) adaptés pour compenser les pertes induites par la première et la deuxième cavité.

Selon un premier mode de réalisation de l'invention, illustré en figure2, la première source S1 comprend un premier laser continu CW1 monochromatique, une première source AM1 adaptée pour générer un premier signal RF $s_1(t)$, et un premier modulateur Mod1 adapté pour moduler en amplitude, par le premier signal RF $s_1(t)$, le rayonnement laser généré par le premier laser continu de manière à former le premier signal d'intérêt. De même, la deuxième source S2 comprend un deuxième laser continu CW2 monochromatique, une deuxième source AM2 adaptée pour générer un deuxième signal RF $s_2(t)$, et un deuxième modulateur Mod2 adapté pour moduler en amplitude, par le deuxième signal RF $s_2(t)$, le rayonnement laser généré par le deuxième laser continu de manière à former le deuxième signal d'intérêt. Alternativement, le dispositif comprend un seul laser monochromatique modulé en amplitude par la première et la deuxième source RF de manière à former respectivement le premier et le deuxième signal d'intérêt.

Dans le premier mode de réalisation de l'invention, le dispositif D permet de déterminer la corrélation croisée du premier signal d'intérêt avec le deuxième signal d'intérêt. Lorsque le premier et le deuxième laser CW1, CW2 ont un temps de cohérence suffisamment long pour que le rayonnement laser reste cohérent au sein des cavités BDF1, BDF2 respectivement (typiquement de l'ordre de la centaine de $\mu s$), alors le signal de sortie SS est la corrélation croisée du premier signal RF $s_1(t)$ avec le deuxième signal RF $s_2(t)$ échantillonnée par $N$ points avec un pas $\tau_1 - \tau_2$. Ce premier mode de réalisation est particulièrement intéressant compte tenu de la bande passante $LS_{in}$ du dispositif qui peut être supérieure à 40 GHz tout en obtenant une fonction de corrélation croisée avec un temps d'acquisition très court, ces valeurs n'étant pas inatteignables par les dispositifs de l'art antérieur réalisant la corrélation croisée de signaux RF.

Dans un deuxième mode de réalisation, la première et la deuxième source S1, S2 sont des sources optiques générant un premier et un deuxième signal d'intérêt Si1, Si2 sous la forme de rayonnements lumineux $s_1(t)$, $s_2(t)$ par exemple une source laser. Dans le deuxième mode de réalisation de l'invention, le dispositif D permet de déterminer une corrélation croisée du premier signal avec le deuxième signal échantillonnée par $N$ points avec un pas $\tau_1 - \tau_2$.

La figure 3 illustre schématiquement un troisième mode de réalisation, compatible avec le premier et le second mode de réalisation, dans lequel la totalité du trajet optique du premier et du second signal d'intérêt Si2, Si2 depuis la source S1, S2 jusqu'à la détection par la photodiode est fibré. L'alignement du dispositif est ainsi simplifié et le dispositif est moins sensible aux chocs et aux vibrations. Dans ce troisième mode de réalisation, la première et la deuxième cavité BDF1, BDF2 sont des cavités fibrées en anneau comprenant respectivement un premier et un deuxième amplificateur à fibre dopé EDFA1, EDFA2 et un premier et un deuxième filtres optiques passe-bande BP1, BP2. Le premier signal Si1 est injecté dans la première cavité BDF1 par le biais d'un coupleur fibré C1 et le deuxième signal Si2 est injecté dans la deuxième cavité BDF2 par le biais d'un coupleur fibré C2.

Comme expliqué précédemment, le premier et le deuxième amplificateur à fibre dopé EDFA1, EDFA2, par exemple des EDFA (Erbium Doped Fiber Amplifier), sont adaptés pour compenser les pertes induites dans les cavités BDF1, BDF2. Les filtres optiques passe-bande BP1, BP2 sont configurés pour fixer ledit nombre N d'aller-retour maximal dans la première et la deuxième cavité et pour limiter le bruit provenant de l'émission spontanée amplifiée des amplificateurs à fibre dopé.

Avantageusement, dans le troisième mode de réalisation, le dispositif D comprend des moyens de stabilisation ST (non représenté) de la première et de la deuxième cavité BDF1, BDF2 adaptés pour maintenir au cours du temps la cohérence entre le premier signal transmis par la première cavité et le deuxième signal transmis par la deuxième cavité. Le dispositif de stabilisation permet d'assurer que les rayonnements transmis par les deux cavités BDF1, BDF2 soient mutuellement cohérent. Un tel dispositif est bien connu de l'homme de l'art et est par exemple décrit dans Coherent multi-heterodyne spectroscopy using acousto-optic frequency combs," Opt. Express 26, 13800-13809 (2018).

La figure 4 illustre schématiquement un quatrième mode de réalisation, compatible avec le premier et le second mode de réalisation, qui constitue une alternative au troisième mode de réalisation. Ce quatrième mode de réalisation vise à s'affranchir du problème du maintien au cours du temps de la cohérence entre le premier signal Si1 et le deuxième signal Si2 transmis par la première et la deuxième cavité. Pour cela le dispositif comprend une cavité unique en anneau fibrée BDF configurée pour former la première et la deuxième cavité BDF1, BDF2 selon le sens d'injection. Cette configuration à une seule cavité en anneau contra-propageante, permet de limiter les effets des fluctuations de longueur de fibres (vibrations, dérives thermiques...) qui peuvent être différentes entre la première et la deuxième cavité du troisième mode de réalisation, et qui entraînent une perte de cohérence au fur et à mesure des allers retours. Elle permet aussi de réduire le nombre de composants optiques nécessaires.

De manière similaire au troisième mode de réalisation, dans le dispositif D du quatrième mode de réalisation, la totalité du trajet optique du signal d'intérêt depuis la première et la deuxième source S1, S2 jusqu'à la détection par la photodiode est fibré. Le dispositif D comprend un premier coupleur fibré C1 adapté pour injecter le premier signal Si1 dans la cavité unique BDF selon un premier sens $S_1$. De plus, le dispositif D comprend un deuxième coupleur fibré C2 adapté pour injecter le deuxième signal Si2 dans la cavité unique BDF selon un deuxième sens $S_2$. La cavité BDF comprend :

- un premier circulateur CO1 adapté pour diriger le premier signal Si1 vers une première ligne à retard DL1 comprenant le premier décaleur de fréquence AOM1.
- un deuxième circulateur CO2 adapté pour diriger le deuxième signal Si2 vers la deuxième ligne à retard DL2 comprenant le deuxième décaleur de fréquence AOM2,
- un amplificateur à fibre dopé EDFA bi-directionnel (fonctionnant dans les deux sens),
- un filtre optique passe bande BP configuré pour fixer ledit nombre maximal N d'aller-retours. Ainsi, la première cavité BDF1 correspond à la cavité unique BDF dans laquelle le premier signal Si1 est injecté selon le premier sens d'injection $S_1$ et la deuxième cavité BDF2 correspond à la cavité unique BDF dans laquelle le deuxième signal Si2 est injecté selon le deuxième sens d'injection $S_2$.

Alternativement, selon une variante du quatrième mode de réalisation, au lieu d'un unique amplificateur EDFA et un unique filtre optique passe bande BP commun au premier signal Si1 et au deuxième signal Si2, la première ligne à retard DL1 comprend un premier amplificateur EDFA1 et un optique passe bande BP1 et la deuxième ligne à retard DL1 comprend un deuxième amplificateur EDFA2 et un optique passe bande BP2.

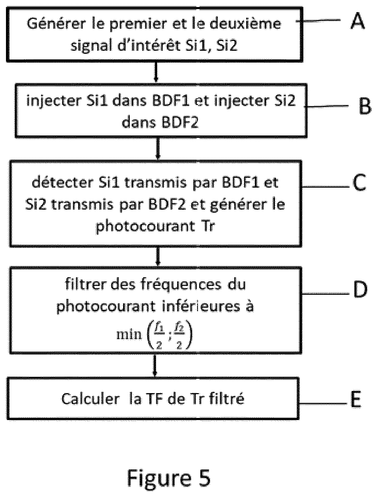

Un autre objet de l'invention est une méthode de mesure de la partie réelle ou du module carré de la corrélation croisée d'un premier et d'un deuxième signal d'intérêt, mise en œuvre par le dispositif D de l'invention. La figure 5 illustre schématiquement cette méthode.

La méthode de la figure 5 comprend les étapes suivantes :

A. générer le premier et le deuxième signal d'intérêt Si1, Si2 ;

B. injecter le premier signal Si1 dans la première cavité optique à décalage de fréquence BDF1 et décaler la fréquence optique du premier signal d'une première fréquence $f_1$ par aller-retour dans la première cavité, et injecter le deuxième signal dans la deuxième cavité optique à décalage de fréquence BDF2 et décaler la fréquence optique du deuxième signal Si2 d'une deuxième fréquence $f_2$ par aller-retour dans la deuxième cavité;

C. détecter de manière cohérente la somme du premier signal transmis par la première cavité et du deuxième signal transmis par la deuxième cavité et générer le photocourant Tr proportionnel à l'intensité lumineuse détectée,

D. filtrer des fréquences du photocourant inférieures à $\min\left(\frac{f_1}{2};\frac{f_2}{2}\right)$,

E. calculer la transformée de Fourier du photocourant filtré, de manière à générer le signal de sortie SS qui est représentatif dans l'espace fréquentiel de la corrélation croisée en temps réel entre le premier signal et le deuxième signal, $C(\tau) = \langle s_1(t)s_2^*(t - \tau)\rangle$, avec $\tau = n(\tau_1 - \tau_2)$, $n \in [1, N]$.

La méthode de la figure 5 possède l'avantage notable d'être large-bande et de ne pas nécessiter de scan afin d'échantillonner la fonction de corrélation croisée.

Selon une première variante de la méthode de la figure 5, la première et la deuxième cavité sont adaptées pour vérifier la condition $f_1 \times \tau_1 = f_2 \times \tau_2$, modulo 1 et l'étape E consiste alors à calculer une transformée de Fourier dudit photocourant, de manière à générer un signal de sortie SS qui est la partie réelle d'une corrélation croisée en temps réel entre le premier signal et le deuxième signal, $C(\tau) = \langle s_1(t)s_2^*(t - \tau)\rangle$, avec $\tau = n(\tau_1 - \tau_2)$, $n \in [1, N]$.

Selon une deuxième variante de la méthode de la figure 5, la première et la deuxième cavité sont adaptées pour que $f_1 \times \tau_1 \neq f_2 \times \tau_2$ modulo 1, l'étape E comprenant en outre le calcul du module carré d'une transformée de Fourier dudit photocourant, le signal de sortie SS correspondant alors à un module carré d'une corrélation croisée en temps réel entre le premier signal et le deuxième signal, $|C(\tau)|^2 = |\langle s_1(t)s_2^*(t - \tau)\rangle|^2$, avec $\tau = n(\tau_1 - \tau_2)$, $n \in [1, N]$.

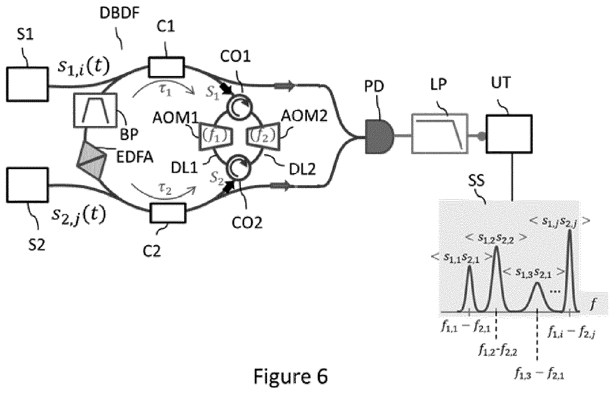

La figure 6 présente un cinquième mode de réalisation dans lequel la première source S1 est configurée pour générer une pluralité de $i \in [1, p]$ premiers sous signaux $s_{1,i}(t)$ superposés spatialement et temporellement de manière à former le premier signal Si1, chaque $i$ premier sous signal présentant une première fréquence centrale $f_{1,i}$ distinctes des autres. De même, la deuxième source est configurée pour générer une pluralité de $j \in [1, q]$ deuxièmes sous signaux $s_{2,j}(t)$ superposés spatialement et temporellement de manière à former le deuxième signal, chaque $j$ deuxième sous signal présentant une deuxième fréquence centrale $f_{2,i}$ distinctes des autres. Ainsi, le signal de sortie SS est une corrélation croisée de chaque premier sous signal avec chaque deuxième sous signal, $C_{i,j}(\tau) = \langle s_{1,i}(t)s_{2,j}^*(t - \tau)\rangle$, avec $\tau = n(\tau_1 - \tau_2)$, $n \in [1, N]$. De manière préférentielle, le temps d'intégration, les premières fréquences centrales $f_{1,i}$ et les deuxièmes fréquences centrales $f_{2,i}$ et les paramètres $\tau_1, \tau_2$ sont adaptés pour qu'il n'existe pas de chevauchement des différentes fonctions de corrélations croisées $C_{i,j}(\tau) = \langle s_{1,i}(t)s_{2,j}^*(t - \tau)\rangle$, avec $\tau = n(\tau_1 - \tau_2)$, $n \in [1, N]$.

Il est entendu que ces premiers et deuxièmes sous signaux peuvent être soit des signaux optiques comme dans le deuxième mode de réalisation de l'invention ou des signaux RF modulant en amplitude un rayonnement laser continu CW comme dans le premier mode de réalisation de l'invention.

L'utilisation d'un nombre important de signaux d'intérêts est particulièrement intéressante dans des applications en interférométrie optique et radioastronomie dans lesquelles il est crucial de corréler plusieurs signaux afin de localiser la position d'un émetteur.

Les équations démontrant que le signal de sortie SS est la fonction de corrélation croisée de Si1 et Si2 sont développées ci-après

On note $t_0$ la fréquence du laser d'injection, $\tau_1, \tau_2$ les temps de parcours dans les boucles, $f_1, f_2$ les fréquences de

décalage par tour, $s_1(t)$ le premier signal d'intérêt et $s_2(t)$ le deuxième signal d'intérêt.

Les champs électriques en sortie de la première et la deuxième cavité valent respectivement :

$$E_1(t) = \sum_{n=0}^{N} s_1(t - n\tau_1) E_0 e^{i2\pi f_0 t} e^{i2\pi n f_1 t} e^{-i\pi f_1 \tau_1 n^2} \tag{1}$$

$$E_2(t) = \sum_{n=0}^{N} s_2(t - n\tau_2) E_0 e^{i2\pi f_0 t} e^{i2\pi n f_2 t} e^{-i\pi f_2 \tau_2 n^2} \tag{2}$$

L'intensité détectée par PD vaut :

$$I(t) = w(t) * E_1(t) E_2^*(t) \tag{3}$$

où $w(t)$ est une fenêtre temporelle centrée en $t$ (liée à la réponse de la détection) et * est le produit de convolution. En omettant le terme $E_0 E_0^*$ , on a

$$I(t) = w(t) * \sum_{n,m} s_1(t - n\tau_1) s_2(t - m\tau_2) e^{i2\pi(nf_1 - mf_2)t} e^{-i\pi(f_1\tau_1 n^2 - f_2\tau_2 m^2)} \tag{4}$$

$$I(t) = \int w(t - t') \sum_{n,m} s_1(t' - n\tau_1) s_2(t' - m\tau_2) e^{i2\pi(nf_1 - mf_2)t'} e^{-i\pi(f_1\tau_1 n^2 - f_2\tau_2 m^2)} \, dt' \tag{5}$$

On choisit les fréquences $f_1$ et $f_2$ telle que $\Delta f = f_2 - f_1 \le f_1/2N,\ f_2/2N$. La durée de la fenêtre w(t) est choisie de l'ordre de $1/N\Delta f$. Elle est donc supérieure à $2/f_1$ et $2/f_1$. Ainsi, seules les paires d'entier ($n, m = n$) ont une contribution non-nulle dans l'intégrale.

On suppose ici que $f_1\tau_1 = f_2\tau_2$. On a alors :

$$I(t) = \int w(t - t') \sum_n s_1(t' - n\tau_1) s_2(t' - n\tau_2) e^{-i2\pi n\Delta f t'} \, dt' \tag{6}$$

Sur la durée de la fenêtre, $e^{-i2\pi n\Delta f t'}$ peut être assimilé à $e^{-i2\pi n\Delta f t}$ car la durée de la fenêtre est plus courte que la période des fonctions $e^{-i2\pi n\Delta f t'}$.

On a ainsi:

$$I(t) = \sum_n e^{-i2\pi n\Delta f t} \int w(t - t') s_1(t' - n\tau_1) s_2(t' - n\tau_2) \, dt' \tag{7}$$

$$I(t) = \sum_n < s_1(t - n\tau_1) s_2(t - n\tau_2) > e^{-i2\pi n\Delta f t} \tag{8}$$

où <> représente la moyenne mesurée sur la durée de la fenêtre.

En faisant un décalage de l'origine des temps, on a

$$I(t) = \sum_n < s_1(t) s_2(t - n\Delta\tau) > e^{-i2\pi n\Delta f t} \tag{9}$$

où $\Delta\tau = \tau_2 - \tau_1$. On définit la fonction de corrélation croisée à l'instant $t$ pour le retard $T$ : $C(t, T) = < s_1(t) s_2(t - T) >$.

Autrement dit :

$$I(t) = \sum_n C(t, n\Delta\tau) \; e^{-i2\pi n\Delta f t} e^{-i\pi(f_1\tau_1 - f_2\tau_2)n^2} \tag{10}$$

Les valeurs de la transformée de Fourier de $I(t)$ aux fréquences $n\Delta f$, sont :

$$\tilde{I}(n\Delta f, t) \propto C(t, n\Delta\tau)e^{-i\pi(f_1\tau_1 - f_2\tau_2)n^2} \tag{11}$$

Si le système est réglé de façon à ce que $f_1\tau_1 = f_2\tau_2$, alors

$$\tilde{I}(n\Delta f, t) \propto C(t, n\Delta\tau) \tag{12}$$

ce qui permet d'accéder à la partie réelle de la fonction de corrélation croisée à l'instant $t$.

On note ce résultat est valable lorsque pour tout $f_1\tau_1 = f_2\tau_2$ modulo 1 (voir équation 5). Par modulo 1, on entend ici $f_1\tau_1 = f_2\tau_2 + k$, avec $k \in \mathbb{N}$.

Sinon, dans le cas général, c'est-à-dire $f_1\tau_1 \neq f_2\tau_2$, modulo 1 les modules carrés de la transformée de Fourier de $I(t)$ aux fréquences $n\Delta f$, sont :

$$\left|\tilde{I}(n\Delta f, t)\right|^2 \propto |C(t, n\Delta\tau)|^2 \tag{13}$$

ce qui permet d'accéder au module carré de la fonction de corrélation croisée à l'instant $t$.

Le système permet donc de calculer, dans le spectre du signal de photodétection, la fonction de corrélation croisée des signaux d'entrée en fonction de leur retard temporel. On a ainsi une projection temps-fréquence (« time to frequency mapping »). Le coefficient de cette projection est simplement $\Delta f / \Delta\tau$.

Le pas temporel de la fonction de corrélation est $\Delta\tau$. La plage des retards accessibles est $N\Delta\tau$.

**Revendications**

1. Dispositif large bande (D) de mesure de la corrélation croisée d'un premier signal et d'un deuxième signal comprenant :

   - une première source (S1) adaptée pour générer ledit premier signal $s_1(t)$ (Si1) ;
   - une deuxième source (S2) adaptée pour générer ledit deuxième signal $s_2(t)$ (Si2);
   - une première cavité optique à décalage de fréquence (DBDF, BDF1) comprenant un premier décaleur de fréquence (AOM1) adapté pour décaler la fréquence optique du premier signal d'une première fréquence $f_1$ par aller-retour dans ladite première cavité, ladite première cavité présentant un premier temps de parcours $\tau_1$ ;
   - une deuxième cavité optique à décalage de fréquence (DBDF, BDF2) comprenant un deuxième décaleur de fréquence (AOM1) adapté pour décaler la fréquence optique du deuxième signal d'une deuxième fréquence $f_2$ par aller-retour dans ladite deuxième cavité, ladite deuxième cavité présentant un deuxième temps de parcours $\tau_2$ ;
   la première et la deuxième cavité optique étant adaptées pour qu'un nombre d'aller-retour maximal du premier et du deuxième signal dans la première et la deuxième cavité soit égal à N prédéterminé
   - un détecteur (PD) adapté pour détecter de manière cohérente le premier signal transmis par la première cavité et le deuxième signal transmis par la deuxième cavité et générer un photocourant (Tr) proportionnel à une intensité lumineuse détectée par ledit détecteur,

   - un filtre passe-bas (LP) adapté pour filtrer des fréquences du photocourant inférieures à $\min\left(\frac{f_1}{2}; \frac{f_2}{2}\right)$,

   - un processeur (UT) configuré pour calculer une transformée de Fourier dudit photocourant filtré par ledit filtre passe-bas, de manière à générer un signal de sortie (SS) représentatif, dans l'espace fréquentiel, d'une corrélation croisée en temps réel entre le premier signal et le deuxième signal,

   $$C(\tau) = \langle s_1(t)s_2^*(t - \tau) \rangle, \text{ avec } \tau = n(\tau_1 - \tau_2), n \in [1, N].$$

2. Dispositif selon la revendication 1, dans lequel le dispositif comprend un laser monochromatique (CW), la première et la deuxième sources comprenant respectivement : une première et une deuxième source RF (AM1, AM2) adaptée pour générer un premier et un deuxième signal RF *s1(t), s2(t)* et un premier et un deuxième modulateur (Mod1, Mod2) adapté pour moduler en amplitude, par ledit premier et ledit deuxième signal RF *s1(t),* un rayonnement laser généré par ledit laser continu, de manière à former ledit premier et ledit deuxième signal .

3. Dispositif selon la revendication 1 ou 2, dans lequel la première source est configurée pour générer une pluralité de $i \in$ [1, *p*] premiers sous signaux $s_{1,i}(t)$ superposés spatialement et temporellement de manière à former le premier signal, chaque i premier sous signal présentant une première fréquence centrale $f_{1,i}$ distinctes des autres,

et dans lequel la deuxième source est configurée pour générer une pluralité de *j* E [1, *q*] deuxièmes sous signaux $s_{2,j}(t)$ superposés spatialement et temporellement de manière à former le deuxième signal, chaque *j* deuxième sous signal présentant une deuxième fréquence centrale $f_{2,j}$ distinctes des autres, ledit signal de sortie étant alors représentatif d'une corrélation croisée de chaque premier sous signal avec chaque deuxième sous signal, $C_{i,j}(\tau) = \langle s_{1,i}(t) s_{2,j}^*(t - \tau) \rangle$ , avec $\tau = n(\tau_1 - \tau_2)$, $n \in [1, N]$.

4. Dispositif selon l'une quelconque des revendications précédentes, dans lequel la première et la deuxième cavité sont adaptées pour vérifier la condition $f_1 \times \tau_1 = f_2 \times \tau_2$ modulo 1, ledit signal de sortie (SS) correspondant alors à la partie réelle d'une corrélation croisée en temps réel entre le premier signal et le deuxième signal,

$$C(\tau) = \langle s_1(t) s_2^*(t - \tau) \rangle ,\ \text{avec } \tau = n(\tau_1 - \tau_2),\ n \in [1, N].$$

5. Dispositif selon l'une quelconque des revendications 1 à 3, dans lequel la première et la deuxième cavité sont adaptées pour que $f_1 \times \tau_1 \neq f_2 \times \tau_2$ modulo 1, ledit processeur étant en outre configuré pour calculer un module carré d'une transformée de Fourier dudit photocourant, le signal de sortie (SS) correspondant alors à un module carré d'une corrélation croisée en temps réel entre le premier signal et le deuxième signal, $|C(\tau)|^2 = |\langle s_1(t) s_2^*(t - \tau) \rangle|^2$ , avec $\tau = n(\tau_1 - \tau_2)$, $n \in [1, N]$.

6. Dispositif selon l'une quelconque des revendications précédentes, dans lequel la première et la deuxième cavité comprennent respectivement un premier et un deuxième amplificateur (EDFA, EDFA1, EDFA2) adaptés pour compenser les pertes induites respectivement par la première et la deuxième cavité.

7. Dispositif selon l'une quelconque des revendications précédentes, dans lequel le premier décaleur de fréquence est un premier modulateur acousto-optique excité par un premier oscillateur local (OL1) adapté pour faire varier ladite première fréquence de décalage et dans lequel le deuxième décaleur de fréquence est un deuxième modulateur acousto-optique excité par un deuxième oscillateur local (OL2) adapté pour faire varier ladite deuxième fréquence de décalage.

8. Dispositif selon l'une quelconque des revendications précédentes, dans lequel la première cavité comprend une première ligne à retard (DL1) contrôlable et adaptée pour faire varier le premier temps de parcours $\tau_1$ et dans lequel la deuxième cavité comprend une deuxième ligne à retard (DL2) contrôlable et adaptée pour faire varier le deuxième temps de parcours $\tau_2$.

9. Dispositif selon l'une quelconque des revendications précédentes, dans lequel la première et la deuxième cavité sont des cavités fibrées en anneau (BDF1, BDF2) comprenant respectivement un premier et un deuxième amplificateur à fibre dopé (DFA1, DFA2) et un premier et un deuxième filtres optiques passe-bande (BP1, BP2) configurés pour fixer ledit nombre maximal N d'aller-retour dans la première et la deuxième cavité.

10. Dispositif selon la revendication précédente, comprenant des moyens de stabilisation (ST) de la première et de la deuxième cavité adaptés pour maintenir au cours du temps la cohérence dudit premier signal transmis par la première cavité avec ledit deuxième signal transmis par la deuxième cavité.

11. Dispositif selon la revendication 7, comprenant une cavité unique en anneau (BDF), ledit dispositif comprenant en outre :

   - un premier coupleur (C1) adapté pour injecter ledit premier signal (V1) dans ladite cavité unique selon un premier sens,
   - un deuxième coupleur (C2) adapté pour injecter ledit deuxième signal (V2) dans ladite cavité unique selon un deuxième sens,

ladite première cavité correspondant à la cavité unique dans laquelle le premier signal est injecté selon le premier sens d'injection,

ladite deuxième cavité correspondant à la cavité unique dans laquelle le deuxième signal est injecté selon le deuxième sens d'injection.

ladite cavité unique en anneau comprenant :

∘ un premier circulateur (CO1) adapté pour diriger le premier signal vers une première ligne à retard (DL1) contrôlable et adaptée pour faire varier le premier temps de parcours $\tau_1$ et comprenant ledit premier décaleur de fréquence (AOM1),

∘ un deuxième circulateur (CO2) adapté pour diriger le deuxième signal vers une deuxième ligne à retard (DL2) contrôlable et adaptée pour faire varier le deuxième temps de parcours $\tau_1$ comprenant ledit deuxième décaleur de fréquence (AOM2),

∘ un amplificateur à fibre dopé (DFA),

∘ un filtre optique passe bande (BP) configuré pour fixer ledit nombre maximal N d'aller-retour,

12. Dispositif selon l'une quelconque des revendications précédentes, dans lequel la première et la deuxième cavité sont configurées pour que $\dfrac{1}{|\tau_1 - \tau_2|} \geq 40\,GHz$.

13. Dispositif selon l'une quelconque des revendications précédentes, dans lequel la première et la deuxième cavité sont configurés pour que $N$ soit supérieur à 200.

14. Méthode de mesure de la corrélation croisée d'un premier et d'un deuxième signal (Si1, Si2) utilisant une première cavité optique à décalage de fréquence (BDF1) présentant un premier temps de parcours $\tau_1$ et une deuxième cavité optique à décalage de fréquence (BDF2) comprenant un deuxième décaleur de fréquence (AOM1) présentant un deuxième temps de parcours $\tau_2$, un nombre maximal d'aller-retour du premier signal et du deuxième dans la première et la deuxième cavité étant égal à N prédéterminé, ladite méthode comprenant les étapes suivantes :

F. générer ledit premier signal $s_1(t)$ et ledit deuxième signal $s_2(t)$;

G. injecter ledit premier signal dans la première cavité optique à décalage de fréquence (BDF1) et décaler la fréquence optique du premier signal d'une première fréquence $f_1$ par aller-retour dans ladite première cavité, injecter ledit deuxième signal dans la deuxième cavité optique à décalage de fréquence (BDF2) et décaler la fréquence optique du deuxième signal d'une deuxième fréquence $f_2$ par aller-retour dans ladite deuxième cavité;

H. détecter de manière cohérente le premier signal transmis par la première cavité et le deuxième signal transmis par la deuxième cavité et générer le photocourant (Tr) proportionnel à l'intensité lumineuse détectée, un nombre maximal d'aller-retour du premier et du deuxième signal dans respectivement la première et la deuxième cavité avant qu'ils soient transmis, étant égal à $N$ prédéterminé, et

I. filtrer des fréquences du photocourant inférieures à $\min\left(\dfrac{f_1}{2}; \dfrac{f_2}{2}\right)$,

J. calculer une transformée de Fourier dudit photocourant filtré, de manière à générer un signal de sortie (SS) qui représentatif d'une corrélation croisée en temps réel entre le premier signal et le deuxième signal,

$$C(\tau) = \langle s_1(t) s_2^*(t - \tau) \rangle$$ , avec $\tau = n(\tau_1 - \tau_2)$, $n \in [1, N]$.

## Patentansprüche

1. Breitbandvorrichtung (D) zur Messung der Kreuzkorrelation eines ersten Signals und eines zweiten Signals, umfassend:

- eine erste Quelle (S1), die dazu ausgelegt ist, das erste Signal $s_1(t)$ (Si1) zu generieren;
- eine zweite Quelle (S2), die dazu ausgelegt ist, das zweite Signal $s_2(t)$ (Si2) zu generieren;
- einen ersten optischen Frequenzverschiebungsresonator (DBDF, BDF1), der einen ersten Frequenzschieber (AOM1) umfasst, der dazu ausgelegt ist, die optische Frequenz des ersten Signals um eine erste Frequenz $f_1$ pro Hin- und Rücklauf in dem ersten Resonator zu verschieben, wobei der erste Resonator eine erste Laufzeit $\tau_1$ aufweist;

- einen zweiten optischen Frequenzverschiebungsresonator (DBDF, BDF2), der einen zweiten Frequenzschieber (AOM2) umfasst, der dazu ausgelegt ist, die optische Frequenz des zweiten Signals um eine zweite Frequenz $f_2$ pro Hin- und Rücklauf in dem zweiten Resonator zu verschieben, wobei der zweite Resonator eine zweite Laufzeit $\tau_2$ aufweist;

wobei der erste und der zweite optische Resonator so ausgelegt sind, dass die maximale Anzahl von Hin- und Rückläufen des ersten Signals und des zweiten Signals im ersten und zweiten Resonator gleich einem vorgegebenen Wert $N$ ist;

- einen Detektor (PD), der dazu ausgelegt ist, das vom ersten Resonator übertragene erste Signal und das vom zweiten Resonator übertragene zweite Signal kohärent zu erfassen und einen Fotostrom (Tr) zu generieren, der proportional zu einer vom Detektor detektierten Lichtintensität ist,

- einen Tiefpassfilter (LP), der ausgelegt ist zum Filtern von Fotostromfrequenzen kleiner als $\min\left(\frac{f_1}{2};\frac{f_2}{2}\right)$,

- einen Prozessor (UT), der dazu konfiguriert ist, eine Fourier-Transformation des durch den Tiefpassfilter gefilterten Fotostroms zu berechnen, um ein Ausgangssignal (SS) zu generieren, das im Frequenzraum eine Echtzeit-Kreuzkorrelation zwischen dem ersten Signal und dem zweiten Signal, $C(\tau) = \langle s_1(t)s^*_2(t - \tau)\rangle$ darstellt, wobei $\tau = n(\tau_1 - \tau_2)$, $n \in [1, N]$.

2. Vorrichtung nach Anspruch 1, wobei die Vorrichtung einen monochromatischen Laser (CW) umfasst, wobei die erste und die zweite Quelle jeweils umfassen: eine erste und eine zweite HF-Quelle (AM1, AM2), die dazu ausgelegt sind, ein erstes und ein zweites HF-Signal $s1(t)$, $s2(t)$ zu generieren, und einen ersten und einen zweiten Modulator (Mod1, Mod2), die dazu ausgelegt sind, eine von dem kontinuierlichen Laser generierte Laserstrahlung durch das erste und das zweite HF-Signal $s1(t)$ in der Amplitude zu modulieren, um das erste und das zweite Signal zu bilden.

3. Vorrichtung nach Anspruch 1 oder 2, wobei die erste Quelle dazu konfiguriert ist, eine Vielzahl von $i \in [1, p]$ ersten Untersignalen $s_{1,i}(t)$ zu generieren, die räumlich und zeitlich überlagert sind, um das erste Signal zu bilden, wobei jedes $i$ erste Untersignal eine erste Mittenfrequenz $f_1,i$ aufweist, die sich von den anderen unterscheidet,

und wobei die zweite Quelle dazu konfiguriert ist, eine Vielzahl von $j \in [1, q]$ zweiten Untersignalen $s_{2,j}(t)$ zu generieren, die räumlich und zeitlich überlagert sind, um das zweite Signal zu bilden, wobei jedes $j$ zweite Untersignal eine zweite Mittenfrequenz $f_{2,i}$ aufweist, die sich von den anderen unterscheidet, wobei das Ausgangssignal dann repräsentativ für eine Kreuzkorrelation jedes ersten Untersignals mit jedem zweiten Untersignal, $C_{i,j}(\tau)= \langle s_{1,i}(t)s^*_{2,j}(t - \tau)\rangle$ ist, wobei $\tau = n(\tau_1 - \tau_2)$, $n \in [1, N]$.

4. Vorrichtung nach einem der vorstehenden Ansprüche, wobei der erste und der zweite Resonator dazu ausgelegt sind, die Bedingung $f_1 \times \tau_1 = f_2 \times \tau_2$ modulo 1 zu überprüfen, wobei das Ausgangssignal (SS) dann dem Realteil einer Echtzeit-Kreuzkorrelation zwischen dem ersten Signal und dem zweiten Signal, $C(\tau) = = \langle s_1(t)s^*_2(t - \tau)\rangle$ entspricht, wobei $\tau = n(\tau_1 - \tau_2)$, $n \in [1, N]$.

5. Vorrichtung nach einem der Ansprüche 1 bis 3, wobei der erste und der zweite Resonator derart ausgelegt sind, dass $f_1 \times \tau_1 \neq f_2 \times \tau_2$ modulo 1, wobei der Prozessor ferner dazu konfiguriert ist, ein quadratisches Modul einer Fourier-Transformation des Fotostroms zu berechnen, wobei das Ausgangssignal (SS) dann einem quadratischen Modul einer Echtzeit-Kreuzkorrelation zwischen dem ersten Signal und dem zweiten Signal, $|C(\tau)|^2 = |\langle s_1(t)s^*_2(t - \tau)\rangle|^2$ entspricht, wobei $\tau = n(\tau_1 - \tau_2)$, $n \in [1, N]$.

6. Vorrichtung nach einem der vorstehenden Ansprüche, wobei der erste und der zweite Resonator jeweils einen ersten und einen zweiten Verstärker (EDFA, EDFA1, EDFA2) umfassen, die dazu ausgelegt sind, die durch den ersten bzw. den zweiten Resonator verursachten Verluste zu kompensieren.

7. Vorrichtung nach einem der vorstehenden Ansprüche, wobei der erste Frequenzschieber ein erster akustooptischer Modulator ist, der durch einen ersten lokalen Oszillator (OL1) angeregt wird, der dazu ausgelegt ist, die erste Frequenzverschiebung zu variieren, und wobei der zweite Frequenzschieber ein zweiter akustooptischer Modulator ist, der durch einen zweiten lokalen Oszillator (OL2) angeregt wird, der dazu ausgelegt ist, die zweite Frequenzverschiebung zu variieren.

8. Vorrichtung nach einem der vorstehenden Ansprüche, wobei der erste Resonator eine erste Verzögerungsleitung (DL1) umfasst, die steuerbar und dazu ausgelegt ist, die erste Laufzeit $\tau_1$ zu variieren, und wobei der zweite Resonator eine zweite Verzögerungsleitung (DL2) umfasst, die steuerbar und dazu ausgelegt ist, die zweite Laufzeit $\tau_2$ zu

variieren.

9. Vorrichtung nach einem der vorstehenden Ansprüche, wobei der erste und der zweite Resonator Faserringresonatoren (BDF1, BDF2) sind, die jeweils einen ersten und einen zweiten dotierten Faserverstärker (DFA1, DFA2) und einen ersten und einen zweiten optischen Bandpassfilter (BP1, BP2) umfassen, die so konfiguriert sind, dass sie die maximale Anzahl $N$ von Hin- und Rückläufen im ersten und im zweiten Resonator festlegen.

10. Vorrichtung nach dem vorstehenden Anspruch, die Stabilisierungsmittel (ST) für den ersten und den zweiten Resonator umfasst, die dazu ausgelegt sind, die Kohärenz des vom ersten Resonator übertragenen ersten Signals mit dem vom zweiten Resonator übertragenen zweiten Signal über die Zeit aufrechtzuerhalten.

11. Vorrichtung nach Anspruch 7, die einen einzigen Ringresonator (BDF) umfasst, wobei die Vorrichtung ferner umfasst:

- einen ersten Koppler (C1), der dazu ausgelegt ist, das erste Signal (V1) in einer ersten Richtung in den einzelnen Resonator einzuspeisen,
- einen zweiten Koppler (C2), der dazu ausgelegt ist, das zweite Signal (V2) in einer zweiten Richtung in den einzelnen Resonator einzuspeisen,
wobei der erste Resonator dem einzigen Resonator entspricht, in den das erste Signal entsprechend der ersten Einspeisungsrichtung eingespeist wird,
wobei der zweite Resonator dem einzigen Resonator entspricht, in den das zweite Signal entsprechend der zweiten Einspeisungsrichtung eingespeist wird,
wobei der einzige Ringresonator umfasst:

  ∘ einen ersten Zirkulator (CO1), der dazu ausgelegt ist, das erste Signal an eine erste Verzögerungsleitung (DL1) weiterzuleiten, die steuerbar und dazu ausgelegt ist, die erste Laufzeit $\tau_1$ zu variieren, und den ersten Frequenzschieber (AOM1) umfasst,
  ∘ einen zweiten Zirkulator (CO2), der dazu ausgelegt ist, das zweite Signal an eine zweite Verzögerungsleitung (DL2) weiterzuleiten, die steuerbar und dazu ausgelegt ist, die zweite Laufzeit $\tau_1$ zu variieren, und den zweiten Frequenzschieber (AOM2) umfasst,
  ∘ einen dotierten Faserverstärker (DFA),
  ∘ einen optischen Bandpassfilter (BP), der so konfiguriert ist, dass er die maximale Anzahl $N$ von Hin- und Rückläufen festlegt.

12. Vorrichtung nach einem der vorstehenden Ansprüche, wobei der erste und der zweite Resonator so konfiguriert sind, dass $\dfrac{1}{|\tau_1 - \tau_2|} \geq 40\ GHz$.

13. Vorrichtung nach einem der vorstehenden Ansprüche, wobei der erste und der zweite Resonator so konfiguriert sind, dass $N$ größer als 200 ist.

14. Verfahren zur Messung der Kreuzkorrelation eines ersten und eines zweiten Signals (Si1, Si2) unter Verwendung eines ersten optischen Frequenzverschiebungsresonators (BDF1) mit einer ersten Laufzeit $\tau_1$ und eines zweiten optischen Frequenzverschiebungsresonators (BDF2), der einen zweiten Frequenzschieber (AOM1) mit einer zweiten Laufzeit $\tau_2$ umfasst, wobei eine maximale Anzahl von Hin- und Rückläufen des ersten Signals und des zweiten in dem ersten und dem zweiten Resonator gleich einem vorgegebenen Wert N ist, wobei das Verfahren die folgenden Schritte umfasst:

F. Generieren des ersten Signals $s_1(t)$ und des zweiten Signals $s_2(t)$;
G. Einspeisen des ersten Signals in den ersten optischen Frequenzverschiebungsresonator (BDF1) und Verschieben der optischen Frequenz des ersten Signals um eine erste Frequenz $f_1$ pro Hin- und Rücklauf in dem ersten Resonator, Einspeisen des zweiten Signals in den zweiten optischen Frequenzverschiebungsresonator (BDF2) und Verschieben der optischen Frequenz des zweiten Signals um eine zweite Frequenz $f_2$ pro Hin- und Rücklauf in dem zweiten Resonator;
H. kohärentes Detektieren des ersten vom ersten Resonator übertragenen Signals und des zweiten vom zweiten Resonator übertragenen Signals und Generieren des Fotostroms (Tr) proportional zur detektierten Lichtintensität, wobei eine maximale Anzahl von Hin- und Rückläufen des ersten und des zweiten Signals in jeweils dem ersten und dem zweiten Resonator, bevor sie übertragen werden, gleich einem vorgegebenen Wert N ist, und

I. Filtern von Fotostromfrequenzen kleiner als $\min\left(\frac{f_1}{2};\frac{f_2}{2}\right)$,

J. Berechnen einer Fourier-Transformation des gefilterten Fotostroms, um ein Ausgangssignal (SS) zu generieren, das repräsentativ für eine Echtzeit-Kreuzkorrelation zwischen dem ersten Signal und dem zweiten Signal, $C(\tau) = \langle s_1(t)s^*_2(t - \tau)\rangle$ ist, wobei $\tau = n(\tau_1 - \tau_2)$, $n \in [1, N]$.

**Claims**

1. A wideband device (D) for measuring the cross-correlation of a first signal and a second signal, comprising:

  - a first source (S1) designed to generate said first signal $s_1(t)$ (Si1);
  - a second source (S2) designed to generate said second signal $s_2(t)$ (Si2);
  - a first frequency-shifting optical cavity (DBDF, BDF1) comprising a first frequency shifter (AOM1) designed to shift the optical frequency of the first signal by a first frequency $f_1$ per round trip in said first cavity, said first cavity having a first trip time $\tau_1$ ;
  - a second frequency-shifting optical cavity (DBDF, BDF2) comprising a second frequency shifter (AOM1) designed to shift the optical frequency of the second signal by a second frequency $f_2$ per round trip in said second cavity, said second cavity having a second trip time $\tau_2$ ;
  the first and the second optical cavity being designed such that a maximum number of round trips of the first and the second signal in the first and the second cavity is equal to predetermined $N$
  - a detector (PD) designed to coherently detect the first signal transmitted by the first cavity and the second signal transmitted by the second cavity and generate a photocurrent (Tr) proportional to a luminous intensity detected by said detector,

  - a low-pass filter (LP) designed to filter frequencies of the photocurrent that are lower than $\min\left(\frac{f_1}{2};\frac{f_2}{2}\right)$,

  - a processor (UT) configured to compute a Fourier transform of said photocurrent filtered by said low-pass filter, so as to generate an output signal (SS) representative, in the frequency space, of a real-time cross-correlation between the first signal and the second signal, $C(\tau) = \langle s_1(t)s^*_2(t - \tau)\rangle$ , with $\tau = n(\tau_1 - \tau_2)$, $n \in [1, N]$.

2. The device as claimed in claim 1, wherein the device comprises a monochromatic laser (CW), the first and the second sources respectively comprising: a first and a second RF source (AM1, AM2) designed to generate a first and a second RF signal $s1(t)$, $s2(t)$ and a first and a second modulator (Mod1, Mod2) designed to amplitude-modulate, using said first and said second RF signal $s1(t)$, laser radiation generated by said continuous-wave laser, so as to form said first and said second signal.

3. The device as claimed in claim 1 or 2, wherein the first source is configured to generate a plurality of $i \in [1, p]$ first sub-signals $s_{1,i}(t)$ that are spatially and temporally superposed so as to form the first signal, each i first sub-signal having a first center frequency $f_{1,i}$ different from the others,

  and wherein the second source is configured to generate a plurality of $j \in [1, q]$ second sub-signals $s_{2,j}(t)$ that are spatially and temporally superposed so as to form the second signal, each $j$ second sub-signal having a second center frequency $f_{2,i}$ different from the others,
  said output signal then being representative of a cross-correlation of each first sub-signal with each second sub-signal, $C_{i,j}(\tau) = \langle s_{1,i}(t)s^*_{2,j}(t - \tau)\rangle$ , with $\tau = n(\tau_1 - \tau_2)$, $n \in [1, N]$.

4. The device as claimed in any one of the preceding claims, wherein the first and the second cavity are designed to verify the condition $f_1 \times \tau_1 = f_2 \times \tau_2$ modulo 1, said output signal (SS) then corresponding to the real part of a real-time cross-correlation between the first signal and the second signal, $C(\tau) = \langle s_1(t)s^*_2(t - \tau)\rangle$ , with $\tau = n(\tau_1 - \tau_2)$, $n \in [1, N]$.

5. The device as claimed in any one of claims 1 to 3, wherein the first and the second cavity are designed such that $f_1 \times \tau_1 \neq f_2 \times \tau_2$ modulo 1, said processor furthermore being configured to compute a square modulus of a Fourier transform of said photocurrent, the output signal (SS) then corresponding to a square modulus of a real-time cross-correlation between the first signal and the second signal, $|C(\tau)|^2 = |\langle s_1(t)s^*_2(t - \tau)\rangle|^2$ , with $\tau = n(\tau_1 - \tau_2)$, $n \in [1, N]$.

6. The device as claimed in any one of the preceding claims, wherein the first and the second cavity respectively comprise a first and a second amplifier (EDFA, EDFA1, EDFA2) designed to compensate for the losses induced respectively by the first and the second cavity.

7. The device as claimed in any one of the preceding claims, wherein the first frequency shifter is a first acousto-optic modulator excited by a first local oscillator (OL1) designed to vary said first shift frequency and wherein the second frequency shifter is a second acousto-optic modulator excited by a second local oscillator (OL2) designed to vary said second shift frequency.

8. The device as claimed in any one of the preceding claims, wherein the first cavity comprises a first controllable delay line (DL1) designed to vary the first trip time $\tau_1$ and wherein the second cavity comprises a second controllable delay line (DL2) designed to vary the second trip time $\tau_2$.

9. The device as claimed in any one of the preceding claims, wherein the first and the second cavity are fiber ring cavities (BDF1, BDF2) comprising respectively a first and a second doped fiber amplifier (DFA1, DFA2) and a first and a second optical bandpass filter (BP1, BP2) configured to set said maximum number N of round trips in the first and the second cavity.

10. The device as claimed in the preceding claim, comprising stabilizing means (ST) for stabilizing the first and the second cavity that are designed to maintain, over time, the coherence of said first signal transmitted by the first cavity with said second signal transmitted by the second cavity.

11. The device as claimed in claim 7, comprising a single ring cavity (BDF), said device furthermore comprising:

- a first coupler (C1) designed to inject said first signal (V1) into said single cavity in a first direction,
- a second coupler (C2) designed to inject said second signal (V2) into said single cavity in a second direction, said first cavity corresponding to the single cavity into which the first signal is injected in the first injection direction, said second cavity corresponding to the single cavity into which the second signal is injected in the second injection direction,
said single ring cavity comprising:

  ◦ a first circulator (CO1) designed to direct the first signal to a first controllable delay line (DL1) designed to vary the first trip time $\tau_1$ and comprising said first frequency shifter (AOM1),
  ◦ a second circulator (CO2) designed to direct the second signal to a second controllable delay line (DL2) designed to vary the second trip time $\tau_1$ and comprising said second frequency shifter (AOM2),
  ◦ a doped fiber amplifier (DFA),
  ◦ an optical bandpass filter (BP) configured to set said maximum number N of round trips.

12. The device as claimed in any one of the preceding claims, wherein the first and the second cavity are configured such that $\dfrac{1}{|\tau_1 - \tau_2|} \geq 40\,GHz$ .

13. The device as claimed in any one of the preceding claims, wherein the first and the second cavity are configured such that N is greater than 200.

14. A method for measuring the cross-correlation of a first and a second signal (Si1, Si2) using a first frequency-shifting optical cavity (BDF1) having a first trip time $\tau_1$ and a second frequency-shifting optical cavity (BDF2) comprising a second frequency shifter (AOM1) having a second trip time $\tau_2$, a maximum number of round trips of the first signal and of the second in the first and the second cavity being equal to predetermined N, said method comprising the following steps:

F. generating said first signal $s_1(t)$ and said second signal $s_2(t)$;
G. injecting said first signal into the first frequency-shifting optical cavity (BDF1) and shifting the optical frequency of the first signal by a first frequency $f_1$ per round trip in said first cavity, injecting said second signal into the second frequency-shifting optical cavity (BDF2) and shifting the optical frequency of the second signal by a second frequency $f_2$ per round trip in said second cavity;
H. coherently detecting the first signal transmitted by the first cavity and the second signal transmitted by the second cavity and generating the photocurrent (Tr) proportional to the detected luminous intensity, a maximum number of round trips of the first and the second signal respectively in the first and the second cavity before they are transmitted being equal to predetermined N, and

I. filtering frequencies of the photocurrent that are lower than $\min\left(\frac{f_1}{2}; \frac{f_2}{2}\right)$,

J. computing a Fourier transform of said filtered photocurrent, so as to generate an output signal (SS) that is representative of a real-time cross-correlation between the first signal and the second signal,

$$C(\tau) = \langle s_1(t)s_2^*(t-\tau)\rangle$$ , with $\tau = n(\tau_1 - \tau_2)$, $n \in [1, N]$.

Figure 1

Figure 2

Figure 3

Figure 4

Générer le premier et le deuxième
signal d'intérêt Si1, Si2 — A

injecter Si1 dans BDF1 et injecter Si2
dans BDF2 — B

détecter Si1 transmis par BDF1 et
Si2 transmis par BDF2 et générer le
photocourant Tr — C

filtrer des fréquences du
photocourant inférieures à
$\min\left(\frac{f_1}{2}; \frac{f_2}{2}\right)$ — D

Calculer la TF de Tr filtré — E

Figure 5

Figure 6

## RÉFÉRENCES CITÉES DANS LA DESCRIPTION

**Littérature non-brevet citée dans la description**

- **BOURDAROT G. et al.** Toward a large bandwidth photonic correlator for infrared heterodyne interferometry : A first laboratory proof of concept. *Astronomy&Astrophysics, juillet*, 2020, vol. 639, 1-7

- *Opt. Express*, 2018, vol. 26, 13800-13809